# EUROPÄISCHE PATENTSCHRIFT

(11) **EP 0 374 280 B1**
(45) Veröffentlichungstag und Bekanntmachung des Hinweises auf die Patenterteilung: **06.10.1993**
(21) Anmeldenummer: 88121316.9
(22) Anmeldetag: 20.12.1988
(51) Int. Cl.: B01D 29/00, B01D 35/14, G09F 3/00

(54) **Einmalfilterhalter**
Disposable filter
Filtre à jeter

(43) Veröffentlichungstag der Anmeldung: 27.06.1990
(73) Patentinhaber: Schleicher & Schuell GmbH, D-37574 Einbeck (DE)
(72) Erfinder: Bugar, Robert, D-3352 Einbeck 15 (DE); Chakraborty, Asok, Dr., D-3400 Göttingen (DE); Urlaub, Herbert, Dr., D-3352 Einbeck 1 (DE)
(74) Vertreter: Jaeger, Klaus, Dr.

(56) Entgegenhaltungen:
- EP-A- 0 261 023
- DE-A- 2 837 058
- DE-A- 3 126 850
- US-A- 3 550 244
- US-A- 3 681 562

## Beschreibung

Die Erfindung betrifft einen farblich gekennzeichneten Einmalfilterhalter aus Kunststoff, bestehend aus einem ersten scheibenartig geformten Gehäuseteil mit einem Zulaufstutzen und einem ebenfalls scheibenartig geformten zweiten Gehäuseteil mit einem Ablaufstutzen, wobei die beiden Gehäuseteile im radial äußeren Bereich an zueinander weisenden, im wesentlichen kreisringförmigen Axialflächen unter Zwischenlage eines scheibenförmigen Filters miteinander fest und druckbelastbar dicht verbunden sind, sowie einer den Einmalfilterhalter im radial äußeren Bereich umlaufenden Farbmarkierung aus farbigem Kunststoff.

Insbesondere betrifft die Erfindung einen Einmalfilterhalter für die Druckfiltration. Die Begriffe "Filter" und "Druckfiltration" schließen im Rahmen der vorliegenden Erfindung ähnliche Verfahren, wie beispielsweise die Ultrafiltration, die umgekehrte Osmose und die einfache Schwerkraftfiltration mit ein.

Einmalfilterhalter der in Rede stehenden Art weisen gebräuchlicherweise ein zweiteiliges Gehäuse aus Kunststoff auf, dessen beide Gehäusehälften druckdicht miteinander verbunden sind, und sind flach und dosenförmig ausgebildet. Innen weisen solche Filterhalter einen im wesentlichen flachen Hohlraum auf, der durch ein Filter, üblicherweise ein Membranfilter, in einen zulaufseitigen Druckraum und einen ablaufseitigen Filtratraum geteilt wird. Das Filter ist dabei gebräuchlicherweise durch eine Filterstützvorrichtung, beispielsweise in Form einer Scheibe, gegen ein Einreißen gesichert.

Gattungsgemäße Einmalfilter werden überall dort eingesetzt, wo es gilt, vorzugsweise kleine und kleinste Fluidvolumina rasch, zuverlässig und bedarfsweise steril zu filtern. Insbesondere finden sie Anwendung auf dem Gebiet der allgemeinen Laboratoriumstechnik, beispielsweise zur Herstellung hochreiner Reaktionslösungen. Ein weiterer wesentlicher Anwendungsbereich ist die medizinische und pharmazeutische Laboratoriumstechnik.

Die Vielfalt dieser Anwendungen erfordert Filterhalter, die sich bei gleichen äußeren Abmessungen des Gehäuses und des Filters lediglich durch die Filterkennwerte, beispielsweise das Filtermaterial bzw. dessen Porengröße und Sterilitätszustand unterscheiden. Da Einmalfilter der in Rede stehenden Art Artikel der Massenproduktion sind, ergibt sich ein Zwang zu einer zuverlässigen, einfachen und unterscheidungskräftigen Kennzeichnung des Produktes. Diese Unterscheidung kann beispielsweise durch eine individualisierende Kennzeichnung eines oder beider Gehäuseteile, beispielsweise durch Einfärben des Gehäusemateriales oder durch Aufbringen einer kennzeichnenden Prägung erfolgen. Nachteilig bei derartig gekennzeichneten Einmalfilterhaltern ist, daß bei einem Produktionswechsel der Typenserie entweder das Formwerkzeug gewechselt oder die komplette Spritzgießmaschine, einschließlich Extruder, bedingt durch die Umstellung auf eine andere Farbe, gereinigt werden muß. Zudem muß eine umfangreiche Lagerhalterung verschieden gekennzeichneter Gehäuseteile erfolgen. Durch diese notwendigen Maßnahmen werden solcherart gekennzeichnete Einmalfilterhalter entscheidend verteuert.

Zur Lösung dieses Problems ist es aus der deutschen Patentschrift DE 28 37 058 C3 bekannt, Einmalfilterhalter verschiedener Typenserien mit gleichem Gehäuse herzustellen. Dazu werden die Gehäusehälften, die für alle Typenserien einer Größenklasse identisch sind, unter Einlegen eines Membranfilters form- oder kraftschlüssig zusammengefügt und anschließend in einem Verschlußformwerkzeug mit einem entsprechend den Kenndaten des Filters eingefärbten Verschlußring aus Kunststoff gas- und druckdicht umspritzt.

Nachteilig bei diesem bekannten Einmalfilterhalter ist jedoch, daß der farbige Ring sowohl Dicht- und Verschlußaufgaben als auch die Aufgabe der Markierung gleichzeitig erfüllt. Dazu muß dieser Verschlußring zum einen sowohl das Gehäuseoberteil als auch das Gehäuseunterteil umgreifend ausgeführt sein und zum anderen eine relativ große Dicke aufweisen. Deshalb ist zur Herstellung dieses Verschlußringes eine relativ große Menge des eingefärbten Kunststoffes nötig, deren Einbringen in das Formwerkzeug mit eingelegtem Filterhalter zudem oft mit aufwendigen konstruktiven Maßnahmen verbunden ist. Weiterhin vergrößert der umlaufende Verschlußring den Außendurchmesser des Filters, der im allgemeinen im Bereich zwischen ein und fünf Zentimetern liegt, nicht unerheblich, wodurch wiederum auf der Herstellerseite Verpackungs- und Lagermehrkosten entstehen, die gerade bei einem Artikel der Massenfertigung von entscheidender Bedeutung sind.

Ausgehend von diesem Stand der Technik ist es daher, die Aufgabe der vorliegenden Erfindung, einen Einmalfilterhalter der eingangs genannten Art zu schaffen, der preiswert herzustellen ist, bei dem die Dicht- und Verschlußfunktion und die Kennzeichnungsfunktion getrennt sind und der eine zuverlässige, beständige farbliche Kennzeichnung des Einmalfilterhalters ermöglicht, ohne daß durch die Aufbringung der farblichen Kennzeichnung eine Vergrößerung der Außenmaße des Einmalfilterhalters erfolgt.

Diese Aufgabe wird von einem Einmalfilterhalter gelöst, der dadurch gekennzeichnet ist, daß daß im ersten Gehäuseteil und/oder im zweiten Gehäuseteil eine Ausnehmung oder in beiden Gehäuseteilen eine diese beiden Gehäuseteile gleichsam überdeckende Ausnehmung angeordnet ist, in der bzw. in denen die Farbmarkierung(en) so angebracht ist bzw. sind, daß sie nicht über die radiale und axialen Gehäuseaußenflächen hinausragt bzw. hinausragen.

Beim Einmalfilterhalter der vorliegenden Erfindung verläuft dementsprechend die Farbmarkierung in mindestens einer Ausnehmung im ersten und/oder zweiten Gehäuseteil fomschlüssig und ragt nicht über die Außenkontur der Gehäuseteile hervor. Dabei dient die Farbmarkierung nicht mehr zu Verschluß- und Dichtungszwecken, sondern ausschließlich dazu, eine sichere Individualisierung bzw. Kennzeichnung des Filtertyps zu gewährleisten. Mit anderen Worten, die Funktion Verschließen und Dichten auf der einen Seite und kennzeichnendes Markieren auf der anderen Seite sind bei der vorliegenden Erfindung vollständig voneinander getrennt. Das gas- und flüssigkeitsdichte, sowie druckdichte Verschließen der beiden Gehäusehälften wird nur durch eine kraftschlüssige Verbindung im Bereich zweier, im wesentlichen ringförmiger Axialflächen an den zueinander weisenden Stirnflächen der Gehäuseteile bewirkt. Diese Verbindung kann beispielsweise durch Verkleben erfolgen. Vorzugsweise jedoch erfolgt die Verbindung in an sich bekannter Weise durch Ultraschallschweißen, wodurch sich eine gute Automatisierbarkeit des Fügeverfahrens bei gleichzeitig niedrigen Fertigungskosten mit befriedigender Dichtigkeit ergibt.

Das Anbringen der Farbmarkierung erfolgt erst nach Verschließen des zweiteiligen Gehäuses des Einmalfilterhalters. Vorzugsweise geschieht dieses Aufbringen durch einen Spritzgießvorgang. Dabei wird das verschlossene Gehäuse in ein Formwerkzeug, das vorzugsweise mehrnestrig ausgeführt ist, eingelegt, worauf die Ausnehmung bzw. die Ausnehmungen im Gehäuse mit einem Kunststoff, vorzugsweise einem thermoplastischen Kunststoff, der entsprechend den Kenndaten des Filters, das heißt entsprechend der Typenserienzuordnung, eingefärbt ist, ausgespritzt werden. Dadurch, daß die Farbmarkierung nur zur Kennzeichnung dient, kann die Dicke und damit das Volumen der eingespritzen Farbmarkierung sehr gering gehalten werden, wodurch sich auf der einen Seite eine erhebliche Materialeinsparung ergibt und auf der anderen Seite eine verkürzte Formfüllungszeit, sowie überhaupt ein verbessertes Formfüllungsverhalten erreicht wird. Hinzu kommt, daß bei gleicher Größe der Spritzgießmaschine, bezogen auf das größtmögliche Materialvolumen pro Spritzvorgang, mehr Formnester im Formwerkzeug gleichzeitig gefüllt werden können, wodurch sich eine wesentliche Erhöhung der Kapazität ergibt, oder, alternativ dazu, kann eine Spritzgießmaschine mit geringerer Kapazität verwendet werden. Diese Verbesserungen sind insbesondere bei einem Artikel der Massenproduktion von signifikanter Bedeutung. Da zudem an die Qualität der eingespritzten Farbmarkierung keine wesentlichen Anforderungen aus Gründen der Betriebssicherheit des Einmalfilterhalters gestellt werden müssen, wird die Ausschußrate entscheidend vermindert.

Eine weitere Verringerung des Volumens der Farbmarkierung ergibt sich dadurch, daß die Farbmarkierung nicht verschlußringartig, im Querschnitt im wesentlichen U-förmig, beide Gehäuseteile umgreifen muß, um ein sicheres Verschließen zu gewährleisten. Insbesondere dadurch kann bei unveränderter Filtergeometrie und damit gleicher Durchfluß- und Filtercharakteristik der Durchmesser des gesamten Einmalfilterhalters geringer gehalten werden, ohne die zum dichten Verschließen notwendigen ringförmigen Axialflächenbereiche zu verkleinern. Mit anderen Worten, die Ausmaße des Einmalfilterhalters, insbesondere der Durchmesser und die axiale Dicke des flach-dosenförmigen Filterbereiches, werden durch die eingespritzte Farbmarkierung nicht vergrößert.

Bei einem bevorzugten Ausführungsbeispiel der Erfindung verläuft die die Farbmarkierung aufnehmende ringnutartige Ausnehmung in der äußeren Mantelfläche des Einmalfilterhalters. Die Ausnehmung kann dabei zu gleichen Teilen in beiden Gehäuseteilen angeordnet sein oder, asymmetrisch, nur in einem Gehäuseteil. Diese Ausführungsform ist insbesondere dann von Vorteil, wenn, bei Verpackung und Gebrauch der Einmalfilterhalter, die Mantelfläche immer frei einzusehen ist.

Bei einem weiteren bevorzugten Ausführungsbeispiel der Erfindung verläuft die die Farbmarkierung aufnehmende Ausnehmung absatzartig im radial äußeren Kantenbereich der axial auswärts gerichteten Stirnfläche mindestens eines der beiden Gehäuseteile. Vorzugsweise jedoch ist die Farbmarkierung in entsprechenden absatzartigen Ausnehmungen in beiden Gehäuseteilen angeordnet. Diese Ausführungsform erlaubt ein sicheres Erkennen des Filtertyps vor allem von oben und unten, bezogen auf die axiale Richtung des Einmalfilterhalters.

Vorzugsweise bestehen beide Gehäuseteile aus zumindest im wesentlichen durchsichtigen Kunststoff und sind, ebenfalls vorzugsweise, durch Spritzgießen hergestellt. Zweckmäßigerweise besteht die Farbmarkierung aus einem im wesentlichen undurchsichtigen eingefärbten Kunststoff.

Die Erfindung ist im folgenden anhand zweier Ausführungsbeispiele in Verbindung mit der Zeichnung näher erläutert. Es zeigen die
- Fig. 1: in schematischer Darstellung ein erstes Ausführungsbeispiel eines Einmalfilterhalters der Erfindung im Axialschnitt und
- Fig. 2: teilweise dargestellt ein zweites Ausführungsbeispiel eines erfindungsgemäßen Einmalfilterhalters, ebenfalls im Axialschnitt.

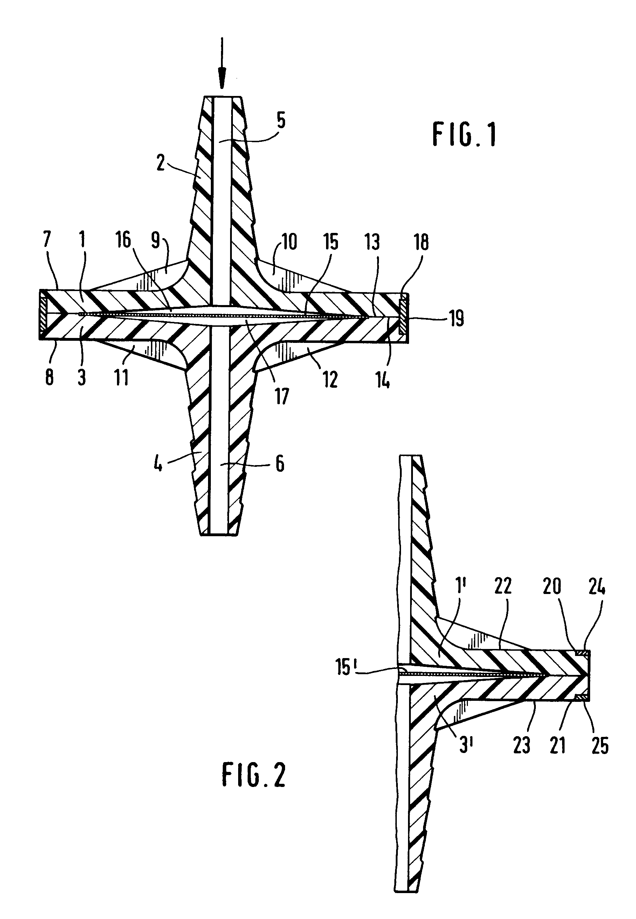

Der Einmalfilterhalter des ersten Ausführungsbeispiels der Erfindung in Fig. 1 besteht aus einem ersten, im wesentlichen scheibenartig geformten Gehäuseteil 1 mit einem Zulaufstutzen 2 und einem zweiten, ebenfalls scheibenartig geformten Gehäuseteil 3 mit einem Ablaufstutzen 4. Zulaufstutzen 2 und Ablaufstutzen 4 sind schlauchtüllenartig geformt und weisen je eine durchgehende Bohrung 5 und 6 auf, die zueinander fluchten.

Die scheibenförmigen Bereiche 7 und 8 des Einmalfilterhalters weisen sternförmig angeordnete Stützrippen 9,10,11,12 in Richtung der Anschlußstutzen 2,4 auf, die, beispielsweise beim Aufstecken nicht dargestellter Anschlußschläuche, ein Abbrechen der relativ dünnen Anschlußstutzen 2,4 verhindern sollen.

Die einander zugewandten Axialflächen der beiden Gehäuseteile 1, 3 weisen im radial äußeren Bereich kreisringförmige Axialflächen 13,14 auf, die zueinander parallel sind. Andiesen beiden kreisringförmigen Axialflächen 13,14 sind die beiden Gehäuseteile 1,3 unter Zwischenlage eines membranartigen Filters 15 durch Ultraschallschweißen gas- und flüssigkeitsdicht, sowie druckfest miteinander verbunden. Die radial innenliegenden Bereiche der Axialflächen sind tellerartig gewölbt und bestimmen so einen im wesentlichen linsenförmigen kammerartigen Hohlraum, der durch das membranartige Filter 15 in eine Druckkammer 16 und eine Filtratkammer 17 geteilt ist. Die Richtung des Filtriervorganges ist in Fig. 1 durch einen Pfeil dargestellt.

Der Einmalfilterhalter der Fig. 1 weist eine Ausnehmung 18 auf, die den Einmalfilterhalter ringnutartig und in sich geschlossen umläuft. Diese Ausnehmung 18 weist eine sehr geringe radiale Dicke auf, so daß die Verbindungsflächen 13,14 nur geringfügig verringert werden. In der Ausnehmung 18 verläuft eine Farbmarkierung 19 formschlüssig, das heißt nicht über die Mantelfläche des Einmalfilterhalters hervorragend. Dadurch wird eine Vergrößerung des Durchmessers des gesamten Gehäuses durch die Markierung unter allen Umständen vermieden.

In Fig. 2 ist ein zweites Ausführungsbeispiel eines Einmalfilterhalters der vorliegenden Erfindung teilweise im Schnitt dargestellt. Dieses Ausführungsbeispiel entspricht im strukturellen Aufbau weitgehend dem oben beschriebenen ersten Ausführungsbeispiel. Jedoch weist dieser Einmalfilterhalter anstelle der ringnutartigen Ausnehmung 18 an beiden Gehäuseteilen 1' und 3' je eine absatzartige Ausnehmung 20,21 auf, die jeweils im radial äußeren Kantenbereich der axial auswärts gerichteten Stirnflächen 22,23 der Gehäuseteile 1',3' angeordnet sind.

In diesen absatzartigen Ausnehmungen 20,21 verläuft die Farbmarkierung, die hier aus zwei getrennten ringartigen farbigen Elastomerringen 24,25 besteht. Auch hier verlaufen diese Elastomerringe 24,25 formschlüssig, das heißt, sie ragen weder in axialer noch in radialer Richtung über die Außenkontur des Gehäuses des Einmalfilterhalters hervor.

## Patentansprüche

1. Farblich gekennzeichneter Einmalfilterhalter aus Kunststoff, bestehend aus einem ersten scheibenartig geformten Gehäuseteil mit einem Zulaufstutzen und einem ebenfalls scheibenartig geformten zweiten Gehäuseteil mit einem Ablaufstutzen, wobei die beiden Gehäuseteile im radial äußeren Bereich an zueinander weisenden, im wesentlichen kreisringförmigen Axialflächen unter Zwischenlage eines scheibenförmigen Filters miteinander fest und druckbelastbar dicht verbunden sind, sowie einer den Einmalfilterhalter im radial äußeren Bereich umlaufenden Farbmarkierung aus farbigem Kunststoff,
dadurch **gekennzeichnet,**
daß im ersten Gehäuseteil (1') und/oder im zweiten Gehäuseteil (3') eine Ausnehmung (20,21) oder in beiden Gehäuseteilen (1,3) eine diese beiden Gehäuseteile gleichsam überdeckende Ausnehmung (18) angeordnet ist, in der bzw. in denen die Farbmarkierung(en) (19;24,25) so angebracht ist bzw. sind, daß sie nicht über die radiale und axialen (22,23) Gehäuseaußenflächen hinausragt bzw. hinausragen.

2. Farblich gekennzeichneter Einmalfilterhalter nach Anspruch 1,
dadurch **geskennzeichnet,**
daß die Ausnehmung (18) ringnutartig in der radial äußeren Mantelfläche des Einmalfilterhalters, welcher durch kreisförmige Axialflächen (13,14) der Gehäuseteile (1,3) gebildet wird, umläuft.

3. Farblich gekennzeichneter Einmalfilterhalter nach Anspruch 1,
dadurch **gekennzeichnet,**
daß die Ausnehmung (20,21) absatzartig im radial äußeren Kantenbereich der axial auswärts gerichteten Gehäuseaußenfläche (22,23) mindestens eines der beiden Gehäuseteile (1',3') umläuft.

4. Farblich gekennzeichneter Einmalfilterhalter nach einem der Ansprüche 1 bis 3,
dadurch **gekennzeichnet,**
daß die Farbmarkierung (19;24,25) aus im wesentlichen undurchsichtigem Kunststoff und die Gehäuseteile (1,3;1',3') aus im wesentlichen durchsichtigem Kunststoff bestehen.

5. Farblich gekennzeichneter Einmalfilterhalter nach einem der Ansprüche 1 bis 4,
dadurch **gekennzeichnet,**
daß die Farbmarkierung (19;24,25) durch Spritzgießen in die Ausnehmung (18) bzw. die Ausnehmungen (20,21) eingebracht sind.

## Claims

1. A color-coded plastic disposable filter-unit consisting of a first disk-like housing part with a feed stub and a second, also disk-shaped housing part with a drain stub, the two housing parts being connected to one another in rigid and pressure-tight manner in the radially outer range at mutually facing and essentially annular axial surfaces, with insertion of a disk-like filter, further consisting of a dyed plastic color-coding element extending around the disposable filter-unit in the radially outer zone,
characterized in that
a clearance (20, 21) is present in the first housing part (1') and/or in the second housing part (3') or a clearance (18) is present in the two housing parts (1, 3) which it covers in identical manner, said clearance(s) receiving the color-coding element(s) (19; 24, 25) in such manner that it (they) shall not project beyond the radial and axial housing outer sides (22, 23).

2. Color-coded disposable filter-unit defined in claim 1, characterized in that the clearance (18) extends in the form of an annular groove in the radially outer surface of the disposable filter-unit formed by the circular axial faces (13, 14) of the housing parts (1, 3).

3. Color-coded disposable filter-unit defined in claim 1, characterized in that the clearance (20, 21) runs peripherally in offset manner in the radially outer rim zone of the axially outward housing outside (22, 23) of at least one of the two housing parts (1', 3').

4. Color-coded disposable filter-unit defined in one of claims 1 through 3, characterized in that essentially the color-coding element (19; 24, 25) consists of opaque plastic and the housing parts (1, 3; 1', 3') consist essentially of transparent plastic.

5. Color-coded disposable filter-unit defined in one of claims 1 through 4, characterized in that the color-coded element (19; 24, 25) is integrated by injection-molding into the clearance (18) or into the clearances (20, 21).

## Revendications

1. Support de filtre à jeter en matière synthétique, marqué en couleur et composé d'une première pièce de boîtier moulée comme un disque et munie d'une tubulure d'alimentation, d'une deuxième pièce de boîtier également moulée comme un disque et munie d'une tubulure d'évacuation, les deux pièces de boîtier étant reliées entre elles dans la zone radialement extérieure de façon fixe et étanche pour pouvoir supporter la pression, sur des surfaces axiales qui se correspondent et pour l'essentiel en forme d'anneau de cercle, avec intercalation d'un filtre en forme de disque, ainsi que d'une marque de couleur en matière synthétique colorée faisant le tour de l'appui du filtre à jeter dans la zone radialement extérieure, caractérisé en ce que dans la première pièce de boîtier (1') et/ou dans la deuxième pièce de boîtier (3') est disposé un creux (20,21) ou en ce que dans les deux pièces de boîtier (1,3) est disposé un creux (18) qui recouvre en quelque sorte ces deux pièces de boîtier et dans lequel ou lesquels la (les) marque(s) de couleur (19, 24, 25) est ou sont appliquée(s) de manière à ne pas sortir des surfaces extérieures radiales et axiales du boîtier (22,23).

2. Support de filtre à jeter marqué en couleur, selon la revendication 1, caractérisé en ce que le creux (18), comme une rainure pour anneau de retenue, se trouve de façon circulaire dans la surface radialement extérieure de l'enveloppe du support du filtre à jeter qui est formé par des surfaces axiales circulaires (13,14) des pièces de boîtier (1,3).

3. Support de filtre à jeter marqué en couleur, selon la revendication 1, caractérisé en ce que le creux (20,21), comme un épaulement, se trouve de façon circulaire dans la zone d'arête radialement extérieure de la surface externe, dirigée vers l'extérieur (22,23), d'au moins l'une des deux pièces de boîtier (1',3').

4. Support de filtre à jeter marqué en couleur, selon la revendication 1, caractérisé en ce que le marquage de couleur (19,24,25) se compose de matière synthétique pour l'essentiel opaque et en ce que les pièces de boîtier se composent de matière synthétique pour l'essentiel transparente.

5. Support de filtre à jeter marqué en couleur, selon l'une des revendications 1 à 4, caractérisé en ce que le marquage de couleur (19,24,25) est introduit par injection dans le creux (18) ou les creux (20,21).
